# EUROPEAN PATENT APPLICATION

(11) **EP 4 257 215 A1**
(43) Date of publication of application: **11.10.2023**
(21) Application number: 23164027.7
(22) Date of filing: 24.03.2023
(51) Int. Cl.: A63F 13/48, A63F 13/211, A63F 13/212, A63F 13/213, A63F 13/215, A63F 13/533

(54) **GAME LAUNCHING SYSTEM AND METHOD**

(30) Priority: 07.04.2022 GB 202205137
(71) Applicant: Sony Interactive Entertainment Inc., Tokyo 108-0075 (JP)
(72) Inventor: COCKRAM, Philip, London, W1F 7LP (GB); JENABZADEH, Mandana, London, W1F 7LP (GB); HENDERSON, Christopher, London, W1F 7LP (GB); EDER, Michael, London, W1F 7LP (GB); BERNABEI, Daniele, London, W1F 7LP (GB)
(74) Representative: D Young & Co LLP

(57) **Abstract**

A game selection system comprises an emotion processor configured to obtain a current emotional state of a user; a descriptor processor configured to obtain one or more emotion descriptors associated with one or more games; an evaluation processor configured to predict an emotion outcome for the user for the or each game, based upon the user's current emotional state and the one or more emotion descriptors of the respective games; and a selection processor configured to select one or more games in response to whether their respective emotion outcomes meet at least a first predetermined criterion.

## Description

The present invention related to a game launching system and method.

As people accumulate libraries of games, or join game subscription services that provide access to a large number of titles, it can be difficult for a user to decide what game to play. The conventional approach is to look at game reviews, game trailers, screenshots, or any other information that may enable a user assessment of a particular game.

However for a library of for example several hundred games, such an approach is not practical.

The present invention seeks to mitigate or alleviate this problem

### SUMMARY OF THE INVENTION

Various aspects and features of the present invention are defined in the appended claims and within the text of the accompanying description.

In a first aspect, a game selection system is provided in accordance with claim 1.

In another aspect, a game selection method is provided in accordance with claim 12.

### BRIEF DESCRIPTION OF THE DRAWINGS

A more complete appreciation of the disclosure and many of the attendant advantages thereof will be readily obtained as the same becomes better understood by reference to the following detailed description when considered in connection with the accompanying drawings, wherein:
- Figure 1 is a schematic diagram of a game selection system in accordance with embodiments of the description.
- Figure 2 is a flow diagram of a game selection method in accordance with embodiments of the description.

### DESCRIPTION OF THE EMBODIMENTS

A game launching system and method are disclosed. In the following description, a number of specific details are presented in order to provide a thorough understanding of the embodiments of the present invention. It will be apparent, however, to a person skilled in the art that these specific details need not be employed to practice the present invention. Conversely, specific details known to the person skilled in the art are omitted for the purposes of clarity where appropriate.

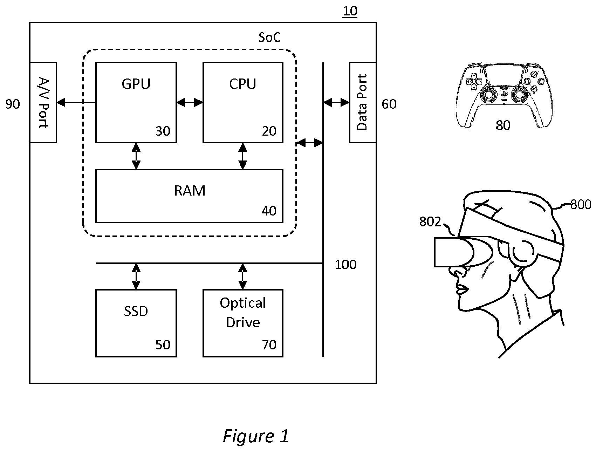

Referring now to the drawings, wherein like reference numerals designate identical or corresponding parts throughout the several views, Figure 1 shows an entertainment system 10, for example a computer or console such as the Sony ^{®} PlayStation 5 ^{®} (PS5), configurable as game launching system (and/or equally a game selection system) in accordance with embodiments of the present description.

The entertainment system 10 comprises a central processor 20. This may be a single or multi core processor, for example comprising eight cores as in the PS5. The entertainment system also comprises a graphical processing unit or GPU 30. The GPU can be physically separate to the CPU, or integrated with the CPU as a system on a chip (SoC) as in the PS5.

The entertainment device also comprises RAM 40, and may either have separate RAM for each of the CPU and GPU, or shared RAM as in the PS5. The or each RAM can be physically separate, or integrated as part of an SoC as in the PS5. Further storage is provided by a disk 50, either as an external or internal hard drive, or as an external solid state drive, or an internal solid state drive as in the PS5.

The entertainment device may transmit or receive data via one or more data ports 60, such as a USB port, Ethernet ^{®} port, WiFi ^{®} port, Bluetooth ^{®} port or similar, as appropriate. It may also optionally receive data via an optical drive 70.

Interaction with the system is typically provided using one or more handheld controllers 80, such as the DualSense ^{®} controller in the case of the PS5.

Audio/visual outputs from the entertainment device are typically provided through one or more A/V ports 90, or through one or more of the wired or wireless data ports 60.

Where components are not integrated, they may be connected as appropriate either by a dedicated data link or via a bus 100.

An example of a device for displaying images output by the entertainment system is a head mounted display 'HMD' 802, worn by a user 800.

In embodiments of the present description, the game launch system, or more generally game selection system, comprises the following.

Firstly, an emotion processor (for example CPU 20 / GPU 30) configured (for example by suitable software instruction) to obtain a current emotional state of the user, as described elsewhere herein.

Secondly, a descriptor processor (for example CPU 20 / GPU 30) configured (for example by suitable software instruction) to obtain one or more emotion descriptors associated with one or more games, as described elsewhere herein.

Thirdly, an evaluation processor (for example CPU 20 / GPU 30) configured (for example by suitable software instruction) to predict an emotion outcome for the user for the or each game, based upon the user's current emotional state and the one or more emotion descriptors of the respective games, as described elsewhere herein.

And fourthly, a selection processor (for example CPU 20 / GPU 30) configured (for example by suitable software instruction) to select (and in some cases to optionally launch) one or more games in response to whether their respective emotion outcomes (e.g. the predicted emotion outcomes) meet at least a first predetermined criterion, as described elsewhere herein.

The emotion processor may obtain an indication of the user's current mood in one or more of a variety of ways.

Firstly, the game selection system may provide a user interface through which the user may provide an explicit indication of their mood. This user interface may comprise one or more dedicated buttons or keys of a controller or other input device such as a keyboard, or may comprise a graphical user interface through which the user can input, select, or otherwise indicate their mood.

Alternatively or in addition, an indication of the user's current mood may be obtained from a psychometric or behavioural test embedded within a game or other app used by the user within the predetermined period prior to selecting a current game based on that mood.

A psychometric or behavioural test may be built into a an app or game, for example in terms of in-game choices made by the user; for example choosing a peaceful or violent option in a game may be respectively indicative of different user moods , as may the selection of different responses in one or more dialogue trees, or the selection of particular weapons, character classes, or the like.

These tests may be particularly useful in the case where the game selection system is considering the recommendation, shortlisting, selection, or launch of one of a plurality of quests or similar optional or elective game elements currently accessible to a user within the same game and play session; hence for example if a user is clearly irritable during the completion of one quest, this emotional state may be used to inform the recommendation, shortlisting, selection, or launch of a new quest etc., within the same game's play session.

Alternatively or in addition, such information can be carried over for a predetermined period of time to be used in the recommendation, shortlisting, selection or launch of subsequent games and/or quests within such games.

Alternatively or in addition to such explicit indications or test based indications, other indicia of the user's current mood / emotional state can be estimated from one or more of a plurality of sources, including the following.
- i.: One or more physiological measurements. for example heart rate, galvanic skin response, pupil dilation, and the like can be treated as indicators of calm or stress depending on the values measured.
- ii.: One or more behaviours. Examples of behaviours (physical and/or in-game) include throwing or slamming a controller 80, so-called 'rage quitting' (in the case of anger); frequent game saves or checking certain itinerary items such as health packs (in the case of nervousness or anxiety), frequent messaging or use of in-game taunts or emotes (in the case of happiness) and the like.
- iii.: Body language. If a video camera (e.g. a webcam) is connected to the game selection system, then the user's body language can be assessed. The user can be recognised and an approximate skeletal model generated (e.g. though centre lines of limbs, torso and head), and this can be compared with known poses and/or pose transitions to estimate body language. The body language in turn can be associated with relevant moods.
- iv.: One or more facial expressions. Facial expressions can be recognised, e.g. by template matching, and associated with relevant moods.
- v.: One or more spoken expressions. Various expressions of happiness, joy, anger, frustration and the like in a respective language can be associated with the relevant moods. Similarly volume and/or tone of voice may be treated as indicia.
- vi.: Use of a user input device relative to a baseline use. By comparing the use of the controller, HMD, or other input device to historical use or mean user (either of the user alone, or a wider cohort of users), changes in behaviour can be determined; hence for example so-called 'button mashing' can be an indication of frustration, whilst either missing a timed input, or not using a function that is frequently used, may be indicative of tiredness or inattention.

Where an input could be ambiguous, either each of the possible associated emotions is considered, or only emotions estimated from multiple inputs are considered, and/or emotions are disambiguated based on an emotion history, e.g. that a current emotion is more likely to be the same or similar to a recent emotion, than an entirely contradictory one. Different predetermined emotion paths for different emotional journeys may be used to disambiguate different emotions and/or emotion histories for a user.

Similarly where an input could be ambiguous, the nature of the current game or app could also be used; one or more emotion descriptors associated with a current game or app could be used to assist with disambiguating an estimated emotional state of the user. Hence a horror game might induce stillness and occasional motion in the user's controller that may look similar to the controller motion in a golf game, but the emotional experience of the user in each case is likely to be different. Typically some other measure would disambiguate this (e.g. heart rate, facial expression, body language, utterances or the like), but if these are not available (or more generally if whatever available measures are insufficient to disambiguate the emotional state of the user) then alternatively or in addition one or more emotion descriptors of the current game may be used to disambiguate the measurements.

In any event, a current estimate of the user's mood may thus be obtained. The estimate may take the form of a label such as 'happy', 'excited', 'frustrated', 'tense', 'angry', or 'calm', or may be a parametric value such as the likelihood of the user being in one of these states, thereby allowing for mixtures such as '50% happy, 50% frightened' or the like. Alternatively or in addition values relating to the measurements upon which the emotion estimates may be based may also be included (e.g. heart rate), and similarly any direct inputs from the user regarding their emotional state, or any data from a psychometric or behavioural test conducted within a predetermined prior period (e.g. 5, 10, 15, or 30 minutes) may also be included as aspects of the user's current emotional state.

Meanwhile, in embodiments of the present description, emotion descriptors may be associated with one or more selected from the list consisting of a game; respective quests or levels/zones etc., of a game; and respective playing modes of a game.

This recognises that a game may provide different emotional rewards at different times within the game or when played in different ways; for example a multiplayer mode of a game may be more frenetic than a single player story, and engender different emotional responses. Meanwhile different quests or equivalently levels, zones, or other compartmentalised aspects of the game such as 'DLCs' (downloadable content) may provide different emotional rewards, with some being thrilling, sad, materially rewarding within the game, or the like.

Accordingly, an emotion descriptor for all or part of a game or game mode typically indicates the emotional state that a typical or average user may be expected to occupy when/after playing the relevant game, game part or game mode. In this case the typical or average user may be assumed to have either a neutral initial emotional state or otherwise predicted emotional state (e.g. if a current part of the game immediately followed a preceding part of the game which also has an emotion descriptor, then the initial emotional state of the user may be assumed based on the preceding emotion descriptor, and so on throughout the game).

In order to base the recommendation, shortlisting, selection, or launch of a game on such emotion descriptors, the descriptor processor is operable to retrieve emotion descriptors for at least a subset of games currently accessible by the user.

These may be for example games are already installed on the user's device, and/or games accessible using a game streaming service or other instant play mechanism such as the PlayStation Now ^{®} streaming service. Meanwhile within a single game, the 'subset of games' may equivalent a relate to the subset of quests, levels, regions, or the like that are currently accessible within the game (e.g. accessible if the game was opened or resumed at the last save point for the game).

In embodiments of the description, the evaluation processor is configured to predict an emotion outcome based on a previously determined correlation between at least a first aspect of an emotion descriptor, at least a first aspect of the obtained current emotional state of the user, and a corresponding emotion outcome.

The at least first aspect may relate to the label of the emotion descriptor such as 'happy' or 'sad', or a parametric description such as the previously mentioned percentage likelihood a given emotion (which for a plurality of motions may for example take the form of a emotion vector).

The correlation relates to what emotion outcome (emotional state) occurs when a user with a particular current emotional state plays a game (game, game quest/level/zone, game mode, etc) having a particular emotion descriptor.

Whilst the game emotion descriptor may be assumed to be an accurate prediction for a neutral or average player, it may not be for a user with a particular current emotional state (or optionally a given emotional state sequence over a predetermined prior period).

To predict what emotional state a user will end up in based on their current emotional state or emotional state sequence and the game emotion descriptor, a correspondence or correlation can be learned for example based on data from the corpus of users

Hence the correlation between one or more aspects of an emotion descriptor and of an emotional state, and subsequent emotional outcome, can be based upon emotion data from a corpus of previous players.

In this case, data from a plurality of players may be previously obtained in a similar manner to how the current emotional state of the current player is obtained (indicated or measured). These players may be quality assurance testers, alpha or beta testers, early access users, and/or an initial and/or previous tranche of players of the game.

For these players, their current emotional state and the emotion descriptor for the game for use as input, and their eventual emotional state after playing the game is used as output the purposes of establishing a correlation between the inputs and the output. Any suitable correlator may be used for this purpose, including for example a machine learning system such as a neural network.

Hence for example a trained machine learning system may receive as input one or more aspects of the user's current emotional state (for example an input emotion vector comprising values relating to the probability of different emotional states, or alternatively or in addition just a flag for a particular emotion) and one or more aspects of the gain emotion descriptor (again for example an input emotion vector comprising values relating to the probability of different emotional states, or alternatively or in addition just a flag for a particular emotion). During training, the machine learning system receives as a target output one or more aspects of the users eventual emotional state after playing the game / quest / mode etc., (again for example an input emotion vector comprising values relating to the probability of different emotional states, or alternatively or in addition just a flag for a particular emotion).

In this way, the machine learning system learns to predict the emotional outcome of a user based on their current emotional state and the game emotion descriptor.

Optionally the machine and the system may be trained on a sequence of emotional states of the user, for example the last N characterisations of their emotional state, typically within a predetermined prior period. The machine learning system may then use this emotional trajectory as the input, to refine the predictions.

An advantage of this approach is that the predicted emotional outcome from playing the game/level/mode is based on a ground truth relating to the emotional state of previous players before and after playing the game, using the game emotion descriptor as a means of identifying or triggering which correlation is relevant.

Whilst it is computationally advantageous to use similar inputs for both the user's current emotional state and the game emotion descriptor (as for most machine learning systems, similar-meaning inputs that are also correlated with the output facilitate efficient learning), optionally the game emotion description can simply be an identifier of the game / quest / level, with the emotion description being implicit in that identification and learned through the ensuing correlation.

In this case the machine learning system needs to internally model how the identifier implies or triggers an emotional link between the input user state and the target/predicted emotion state. If the machine learning system has to model many games / quests / levels in this way it may become error-prone (or require a comparatively larger number of neurons or equivalent connections) as it would be using uncorrelated identifiers (e.g. the title or other ID of a game does not in itself necessarily relate to the emotional outcome of the game) - however, if the machine learning system only has to learn about a small number of games, or there is a machine learning system per game, then the process devolves so that the emotion descriptors associated with one or more games / quests / etc. are for example simple flag inputs or values indicating which of the games / quests / etc. is being considered.

In other words, one may use emotion descriptors that are general or universal and relate to the user's expected emotions when the machine learning / correlating system is applied generally to any game (or a large number of games), but the input emotion descriptors can increasingly rely on an indication of the specific game and less on the emotions associated with it as the number of games the machine learning system has to model gets smaller. Finally, if it only models one game, then selection of that machine learning model or equivalent correlator is itself the indication and no explicit input from the game is needed (though it could still be used).

As noted previously herein, the target data used for training such a system can be the same combination of indications and/or measurements described previously herein; hence where a user's current emotional state is measured during a game or at certain points in a game (e.g. periodically, and/or based on events such as completing a quest or level, or defeating a boss, or other scripted moments), this can also be treated as an emotional outcome for that game corresponding to a previous emotional state of the user earlier in the game (e.g. at the start of a quest or level, and the like). These pairs of evaluations can then be used for training the system. The corpus of users contributing to such training data can be quality assurance testers, alpha or beta testers, early access users, and/or an initial and/or previous tranche of players of the game. Furthermore, where the emotion descriptors are applicable to a plurality of games, then information from a plurality of games can be used to train the system, or information from one game can be used for predicting outcomes for other games (for example an initial machine learning system can be trained using a first game, and this can then be used to help with predictions for new games before a significant cohort of players have played them. Of course, optionally subsequent training material of such other games can also be added to the training set.

It will be appreciated that the emotion descriptors for games may be generated for the game by its developer, for example according to a set of guidelines intended to provide a consistent evaluation of games for this purpose. However, it is possible that a developer or publisher's evaluation of the emotional effect / outcome of a game is not borne out by actual user experience.

Therefore optionally the emotion description for a game may itself be derived from prior user data, for example averaged across a cohort of users. Further optionally an initial estimate of the emotion description by the developer or publisher may give way to such an empirical emotion description, for example by a weighted average of the two descriptions that transitions from 100% the initial estimate to 100% the empirical one as the number of players contributing to the empirical estimate increases to a suitable statistically significant number.

Further optionally, the cohort of users may be divided up according to their initial emotion state, so that different emotion descriptors for the game are used for different initial user emotional states. In this way the emotion descriptor input to the correlator is likely to be a much closer approximation of the target during training and the prediction during use. These initial emotion states could be automatically categorised, for example using K-means clustering to generate K initial states. The initial state closest to the user's current emotional state could then be used as the emotion descriptor input alongside the user's current emotional state to obtain a more accurate prediction of the expected emotional outcome for the user.

Next, in embodiments of the description, where the selection processor is configured to select one or more games in response to whether their respective emotion outcomes meet at least a first predetermined criterion, that predetermined criterion may be one or more selected from the list consisting of the predicted emotional outcome matching a desired emotional outcome indicated by the user; the predicted emotional outcome being in a predetermined group of emotional outcomes that includes a desired emotional outcome indicated by the user; and the predicted emotional outcome being in a predetermined group of emotional outcomes selected as being positive (e.g. positive given the user's input emotional state).

In the first case, the desired emotional outcome indicated by the user by be indicated again either by a button or other physical input, or via a user interface (e.g. either typing their wish, or using a graphical input).

Alternatively, the desired emotional outcome may be indicated implicitly or unintentionally; for example a series of emotional states of a predetermined prior period may indicate the user's desired emotional trajectory, or (via a simple continue / change interface) indicate the direction the user does not want to continue in.

Similarly alternatively, the desired emotional outcome may be indicated via previous interactions with the system; for example by indicating satisfaction with a previous emotional outcome, the system can learn what emotional state transitions the user considers to be positive. Hence the indication does not need to be in advance of the selection process, but can be based on previous indications of successful selection processes.

In the second case, the same general approaches can apply, but the match can be more approximate; for example some people might equally want fear or excitement from a particular game session, and so any predicted emotional outcome falling in that group is seen as good.

In the third case, the same general approaches can apply but the match can be more approximate still, with any emotional outcome assumed or empirically measured to be positively received by the user (or other such users) being seen a good.

Alternatively or in addition to criteria based on user emotional outcomes, optionally criteria can be based on outcomes set by the game - this enables the games developer to effectively choose when a game / quest / level / etc., will be selected so that the emotional outcome for the user best matches the emotional outcome that the game developer wants to achieve.

Hence in this case the predetermined criterion is one or more selected from the list consisting of the predicted emotional outcome matching a desired emotional outcome indicated by the game; and the predicted emotional outcome being in a predetermined group of emotional outcomes that includes a desired emotional outcome indicated by the game. Again the evaluation of these is generally the same as described previously for the user-based outcomes.

The degree of match (or the centrality of a match within a group, or the degree of match to a preferred emotional outcome with such a group, as desired) can be used to rank the results for a plurality of games, and/or game levels / zones / quests / modes / etc.

Based on such a ranking, the selection processor may be configured to select one selected from the list consisting of a single game quest or level currently accessible by the user; a single game currently accessible by the user in a particular play mode; a single game currently accessible by the user; a shortlist of game quests or levels currently accessible by the user; a shortlist of game quests or levels currently accessible by the user in respective play modes; and a shortlist of games currently accessible by the user.

Hence it will be appreciated that the game selection system may recommend or select some or all of a game, or a shortlist of some or all of a plurality of games, from among a set of game accessible to a user (i.e. games they can play in response to the selection, for example games installed on the user's games machine, or accessible through a subscription streaming service). Optionally other games (and/or so-called DLCs for existing games) that may be downloaded and installed before play may also be included.

Optionally, the top ranking game (game/quest/mode/etc) may be launched by the game selection system. The launch may either be automatic, or may comprise a dialog step where the user is asked if they want to launch the game. Optionally the reason why the game has been selected for launch may be provided (e.g. the expected emotional outcome of play). Optionally the launch process may include a shortlist of games, the selection of one of which by the user continues the launch process for that game/quest/mode/etc.

Hence the selection processor may be configured to launch one selected from the list consisting of: a quest or level of a game currently accessible by the user; a game currently accessible by the user in a particular play mode; and a game currently accessible by the user, and/or optionally launch any of these with a preceding user check, or shortlist for launch a plurality of such items with user final selection of what proceeds to launch.

Variants of the above system may include additional information indicative of the current user's emotional state (and/or similarly the emotional state of prior uses within a corpus used for training / empirical data purposes as described elsewhere herein). This additional information may include for example duration of playtime of a game (game, quest/level/mode etc.,). If a user plays for longer than an average playtime it may suggest engagement with the game and hence a positive emotional outcome.

Notable this can be the case even if the associated measured or indicated emotions are negative; this may be referred to as the 'just one more try' appeal of a game, where the emotional payoff of success may be dependent on the degree of frustration of preceding attempts. In this case a game where periodic measurements indicate anger or frustration, but (sometimes) end with joy or relief, may for example be distinguished by play duration being longer than a mean duration; those who persist at such a task enjoy the payoff. In this can it may be that certain emotional states (or emotional state trajectories) together with play time lengths can indicate whether a particular user will appreciate such a game / quest / mode or not.

Other examples of how relative play duration may indicate positive or negative emotional outcomes will be apparent to the skilled person, and may vary with game genre or title.

As noted previously, the above approach may also be used for a game that a current user is already playing, in order to promote a quest / level / zone / mode that will encourage further play; if a user can anticipate a positive emotional outcome from continued play, then they are more likely to continue playing.

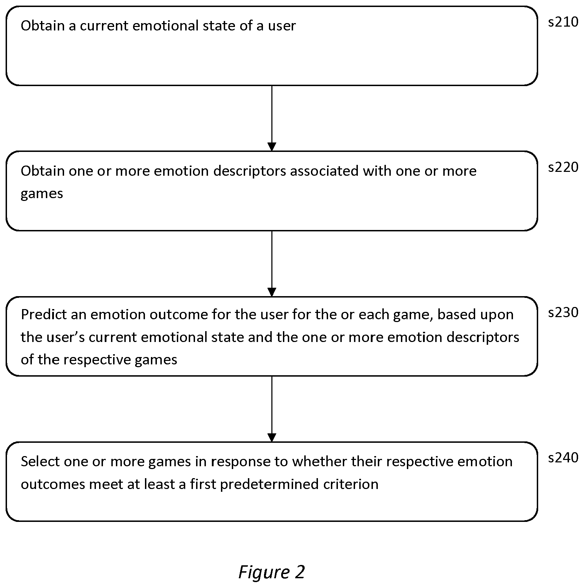

Turning now to Figure 2, in an embodiment of the present description a game selection method comprises the following steps.

In a first step s210, obtaining a current emotional state of a user, as described elsewhere herein.

In a second step s220, obtaining one or more emotion descriptors associated with one or more games, as described elsewhere herein.

In a third step s230, predicting an emotion outcome for the user for the or each game, based upon the user's current emotional state and the one or more emotion descriptors of the respective games, as described elsewhere herein.

And in a fourth step s240, selecting one or more games in response to whether their respective emotion outcomes meet at least a first predetermined criterion, as described elsewhere herein.

It will be apparent to a person skilled in the art that variations in the above method corresponding to operation of the various embodiments of the apparatus as described and claimed herein are considered within the scope of the present invention, including but not limited to that:
- the predicting step comprises predicting an emotion outcome based on a previously determined correlation between at least a first aspect of an emotion descriptor, at least a first aspect of the obtained current emotional state of the user, and a corresponding emotion outcome, as described elsewhere herein; and
- the correlation between one or more aspects of an emotion descriptor and of an emotional state, and an emotional outcome, is based upon emotion data from a corpus of previous players, as described elsewhere herein.

The foregoing discussion discloses and describes merely exemplary embodiments of the present invention. As will be understood by those skilled in the art, the present invention may be embodied in other specific forms without departing from the spirit or essential characteristics thereof. Accordingly, the disclosure of the present invention is intended to be illustrative, but not limiting of the scope of the invention, as well as other claims. The disclosure, including any readily discernible variants of the teachings herein, defines, in part, the scope of the foregoing claim terminology such that no inventive subject matter is dedicated to the public.

## Claims

1. A game selection system, comprising:
an emotion processor configured to obtain a current emotional state of a user;
a descriptor processor configured to obtain one or more emotion descriptors associated with one or more games;
an evaluation processor configured to predict an emotion outcome for the user for the or each game, based upon the user's current emotional state and the one or more emotion descriptors of the respective games; and
a selection processor configured to select one or more games in response to whether their respective emotion outcomes meet at least a first predetermined criterion.

2. The game selection system of claim 1, in which:
the emotion processor is configured to obtain an indication of the user's current mood from one or more selected from the list consisting of:
i. an indication of mood from the user via a user interface; and
ii. an indication of mood from a psychometric or behavioural test embedded within a game or other app used by the user within a predetermined prior period.

3. The game selection system of claim 1 or claim 2, in which:
the emotion processor is configured to estimate the user's current mood based upon one or more selected from the list consisting of:
i. one or more physiological measurements;
ii. one or more behaviours;
iii. body language;
iv. one or more facial expressions;
v. one or more spoken expressions; and
vi. use of a user input device relative to a baseline use.

4. The game selection system of any previous claim, in which:
emotion descriptors are associated with one or more selected from the list consisting of:
i. a game;
ii. respective quests or levels of a game; and
iii. respective playing modes of a game.

5. The game selection system of any previous claim, in which:
The descriptor processor is operable to retrieve emotion descriptors for at least a subset of games currently accessible by the user.

6. The game selection system of any previous claim, in which:
the evaluation processor is configured to predict an emotion outcome based on a previously determined correlation between at least a first aspect of an emotion descriptor, at least a first aspect of the obtained current emotional state of the user, and a corresponding emotion outcome.

7. The game selection system of claim 6, in which:
the correlation between one or more aspects of an emotion descriptor and of an emotional state, and an emotional outcome, is based upon emotion data from a corpus of previous players.

8. The game selection system of any previous claim, in which:
the predetermined criterion is one or more selected from the list consisting of:
i. the predicted emotional outcome matching a desired emotional outcome indicated by the user;
ii. the predicted emotional outcome being in a predetermined group of emotional outcomes that includes a desired emotional outcome indicated by the user; and
iii. the predicted emotional outcome being in a predetermined group of emotional outcomes selected as being positive.

9. The game selection system of any previous claim, in which:
the predetermined criterion is one or more selected from the list consisting of:
i. the predicted emotional outcome matching a desired emotional outcome indicated by the game; and
ii. the predicted emotional outcome being in a predetermined group of emotional outcomes that includes a desired emotional outcome indicated by the game.

10. The game selection system of any previous claim, in which:
the selection processor is configured to select one selected from the list consisting of:
i. a single game quest or level currently accessible by the user;
ii. a single game currently accessible by the user in a particular play mode;
iii. a single game currently accessible by the user;
iv. a shortlist of game quests or levels currently accessible by the user;
v. a shortlist of game quests or levels currently accessible by the user in respective play modes; and
vi. a shortlist of games currently accessible by the user.

11. The game selection system of any previous claim, in which:
the selection processor is configured to launch one selected from the list consisting of:
i. a quest or level of a game currently accessible by the user;
ii. a game currently accessible by the user in a particular play mode; and
iii. a game currently accessible by the user.

12. A game selection method, comprising:
obtaining a current emotional state of a user;
obtaining one or more emotion descriptors associated with one or more games;
predicting an emotion outcome for the user for the or each game, based upon the user's current emotional state and the one or more emotion descriptors of the respective games; and
selecting one or more games in response to whether their respective emotion outcomes meet at least a first predetermined criterion.

13. The game selection method of claim 12, in which:
the predicting step comprises predicting an emotion outcome based on a previously determined correlation between at least a first aspect of an emotion descriptor, at least a first aspect of the obtained current emotional state of the user, and a corresponding emotion outcome.

14. The game selection method of claim 13, in which:
the correlation between one or more aspects of an emotion descriptor and of an emotional state, and an emotional outcome, is based upon emotion data from a corpus of previous players.

15. A computer program comprising computer executable instructions adapted to cause a computer system to perform the method of any one of claims 12 to 14.
